# EUROPÄISCHE PATENTSCHRIFT

(11) **EP 4 112 374 B1**
(45) Veröffentlichungstag und Bekanntmachung des Hinweises auf die Patenterteilung: **11.03.2026**
(21) Anmeldenummer: 22180433.9
(22) Anmeldetag: 22.06.2022
(51) Int. Cl.: B60N 3/00, B60N 3/10

(54) **GETRÄNKEHALTEREINRICHTUNG FÜR EIN FAHRZEUG**
DRINK HOLDER DEVICE FOR A VEHICLE
DISPOSITIF PORTE-BOISSON POUR UN VÉHICULE

(30) Priorität: 30.06.2021 DE 102021116836
(43) Veröffentlichungstag der Anmeldung: 04.01.2023
(73) Patentinhaber: Lisa Dräxlmaier GmbH, 84137 Vilsbiburg (DE)
(72) Erfinder: DIETL, Günter, 84432 Hohenpolding (DE)

(56) Entgegenhaltungen:
- CN-A- 112 590 636
- CN-A- 112 677 854
- JP-A- 2016 060 316

## Beschreibung

### Technisches Gebiet

Die Erfindung betrifft eine Getränkehaltereinrichtung für ein Fahrzeug.

### Stand der Technik

Cupholder können insbesondere bei Nichtgebrauch einen offenen Bereich darstellen, welcher unschön ist. Um unterschiedliche Gefäße sicher halten zu können, ist vor allem eine große beziehungsweise optimale Einstelltiefe und eine Möglichkeit verschiedene Durchmesser abzudecken nötig. Hierfür gibt es beim Serienfahrzeugbau eine Vielzahl an Varianten von Ausgleichselementen, die sich einem Durchmesser des zu haltenden Gefäßes anpassen und mittels Federkraft den in den Cupholder eingestellten Behälter festhalten. Die erzielte Haltekraft und Funktion der Cupholder ist hierbei immer ein Kompromiss, da es gilt Einstellkräfte und Entnahmekräfte möglichst klein zu halten und gleichzeitig eine besonders große Haltekraft für den eingestellten Behälter gewünscht ist.

JP 2016060316 A zeigt eine Getränkehaltereinrichtung gemäß dem Oberbegriff des Anspruchs 1.

### Beschreibung der Erfindung

Aufgabe der vorliegenden Erfindung ist es, eine Getränkehaltereinrichtung zu schaffen, welche bei Nichtgebrauch besonders gut verstaut ist.

Diese Aufgabe wird erfindungsgemäß durch den Gegenstand des unabhängigen Patentanspruchs gelöst. Weitere mögliche Ausgestaltungen der Erfindung sind in den Unteransprüchen, der Beschreibung und den Figuren offenbart.

Die Erfindung betrifft eine Getränkehaltereinrichtung für ein Fahrzeug, insbesondere für ein Kraftfahrzeug, insbesondere für einen Kraftwagen, welche zwischen einer Verstaustellung und wenigstens einer Gebrauchsstellung verstellbar ist. Die Getränkehaltereinrichtung ist dazu eingerichtet, in der Gebrauchsstellung ein Getränkebehältnis zu halten. Die Getränkehaltereinrichtung umfasst ein eine Ablagefläche für das Getränkebehältnis bereitstellendes Ablageelement, welches in der Gebrauchsstellung eine Bodenfläche einer Aufnahme für das Getränkebehältnis bereitstellt. In dieser Aufnahme ist das Getränkebehältnis für ein sicheres Halten des Getränkebehältnisses in der Getränkehaltereinrichtung aufnehmbar. Für das Aufnehmen des Getränkebehälters in der Aufnahme kann zumindest in der Gebrauchsstellung das Getränkebehältnis auf das Ablageelement aufgestellt werden.

Die Getränkehaltereinrichtung umfasst des Weiteren einen Getränkehalter, welcher dazu eingerichtet ist, in der Gebrauchsstellung eine die Aufnahme umfangsseitig begrenzende Wandung bereitzustellen. Weiterhin ist der Getränkehalter dazu eingerichtet, in der Verstaustellung bündig mit der Ablagefläche oder unter der Ablagefläche abzuschließen. Der Getränkehalter bildet mit einem weiteren Element einen schraubenförmigen Eingriff aus. Für diesen schraubenförmigen Eingriff können der Getränkehalter und/oder das weitere Element einen gewindeartigen Abschnitt aufweisen. Weist der Getränkehalter den gewindeartigen Abschnitt auf, dann greift das weitere Element in den gewindeartigen Abschnitt des Getränkehalters ein. Weist das weitere Element den gewindeartigen Abschnitt auf, dann greift der Getränkehalter in den gewindeartigen Abschnitt des weiteren Elements ein. Über den schraubenförmigen Eingriff kann durch eine Rotationsbewegung des Getränkehalters und des weiteren Elements relativ zueinander eine translatorische Bewegung des Getränkehalters relativ zu dem weiteren Element ausgelöst werden.

Die Getränkehaltereinrichtung umfasst des Weiteren eine Antriebseinrichtung, welche ein Antriebselement umfasst. Dieses Antriebselement ist dazu eingerichtet, eine Rotationsbewegung des Getränkehalters relativ zu dem weiteren Element auszulösen. Bei dem weiteren Element handelt es sich um das Ablageelement oder um das Antriebselement. Insbesondere ist das Antriebselement dazu eingerichtet, eine Rotationsbewegung des Getränkehalters relativ zu dem weiteren Element um eine Mittelachse des Getränkehalters auszulösen. Durch die Rotationsbewegung des Getränkehalters relativ zu dem weiteren Element kann für ein Verstellen der Getränkehaltereinrichtung zwischen der Verstaustellung und der Gebrauchsstellung der Getränkehalter relativ zu dem Ablageelement höhenverstellt werden. Das bedeutet, dass mittels des Antriebselements der Getränkehalter relativ zu dem Antriebselement oder relativ zu dem Ablageelement in Rotation versetzt werden kann, wodurch die translatorische Bewegung des Getränkehalters relativ zu dem Ablageelement ausgelöst werden kann. Über die translatorische Bewegung des Getränkehalters zu dem Ablageelement kann der Getränkehalter relativ zu dem Ablageelement höhenverstellt werden, insbesondere über die Ablagefläche herausverstellt werden beziehungsweise bündig mit der Ablagefläche abschließend beziehungsweise hinter der Ablagefläche abschließend zurückverstellt werden. Mit anderen Worten umfasst die Getränkehaltereinrichtung das Ablageelement, auf dessen bereitgestellter Ablagefläche das Getränkebehältnis abgestellt werden kann. Für ein Verstellen der Getränkehaltereinrichtung aus der Verstaustellung in die wenigstens eine Gebrauchsstellung wird der Getränkehalter relativ zu der Ablagefläche bei einer Einbaulage der Getränkehaltereinrichtung in dem Fahrzeug nach oben verstellt, wodurch der Getränkehalter die Aufnahme seitlich begrenzt. In der wenigstens einen Gebrauchsstellung der Getränkehaltereinrichtung wird somit die Aufnahme nach unten durch die von dem Ablageelement bereitgestellte Ablagefläche und zur Seite hin durch den Getränkehalter begrenzt.

Die Getränkehaltereinrichtung ermöglicht, dass in der wenigstens einen Gebrauchsstellung die Aufnahme bereitgestellt ist, in welcher das Getränkebehältnis aufgenommen werden kann, wohingegen in der Verstaustellung der Getränkehalter hinter der Ablagefläche zurücktritt beziehungsweise mit der Ablagefläche bündig abschließt, sodass in der Verstaustellung die Aufnahme nicht für ein Aufnehmen des Getränkebehältnisses bereitsteht. Hierdurch kann eine Verschmutzungsgefahr der Aufnahme bei einer Anordnung der Getränkehaltereinrichtung in der Verstaustellung besonders geringgehalten werden. Darüber hinaus kann die Getränkehaltereinrichtung mittels der Antriebseinrichtung in ihrer Einstelltiefe beziehungsweise der Höhe der Aufnahme stufenlos elektrisch ausgefahren werden. Bei Nichtgebrauch kann der Getränkehalter zumindest im Wesentlichen bei einer Draufsicht auf die Ablagefläche unsichtbar hinter dem Ablageelement verstaut werden. Die Getränkehaltereinrichtung ermöglicht somit eine geschlossene cleane Oberfläche bei Nichtgebrauch. Durch diese Integration ist ein sauberes Design möglich. Aufgrund einer variablen Einstelltiefe des Getränkehalters relativ zu dem Ablageelement kann die Aufnahme optimal an das zu haltende Getränkebehältnis angepasst werden. Bei der Getränkehaltereinrichtung werden keine beweglichen Ausgleichselemente für eine Durchmesseranpassung benötigt. Im Bauraum für einen Cupholder im Fahrzeug können zwei in ihrem Durchmesser unterschiedlich große Getränkehalter untergebracht sein, welche dazu eingerichtet sind, zueinander unterschiedlich große Getränkebehältnisse sicher aufzunehmen. In der wenigstens einen Gebrauchsstellung ermöglicht die Getränkehaltereinrichtung ein optimales Halten von Getränkebehältnissen insbesondere aufgrund einer variablen Einstellhöhe des Getränkehalters relativ zu dem Ablageelement.

Weiterhin sind vorteilhafterweise bei der Getränkehaltereinrichtung keine filigranen beweglichen Halteelemente nötig.

Erfindungsgemäß ist es vorgesehen, dass der Getränkehalter mit dem Ablageelement als weiterem Element den schraubenförmigen Eingriff ausbildet und dass das Antriebselement dazu eingerichtet ist, den Getränkehalter relativ zu dem Ablageelement in Rotation zu versetzen. Hierbei kann die Antriebseinrichtung dazu eingerichtet sein, das Antriebselement in Rotation relativ zu dem Ablageelement zu versetzen, wobei der Getränkehalter drehfest mit dem Antriebselement verbunden sein kann. Infolgedessen kann der Getränkehalter über die Rotation des Antriebselements relativ zu dem Ablageelement in Rotation versetzt werden. Über das Rotieren des Getränkehalters relativ zu dem Ablageelement und den schraubenförmigen Eingriff des Getränkehalters mit dem Ablageelement kann der Getränkehalter beim Verstellen der Getränkehaltereinrichtung aus der Verstaustellung in die wenigstens eine Gebrauchsstellung translatorisch relativ zu dem Ablageelement bewegt werden, insbesondere relativ zu der Ablagefläche hochverschraubt werden und somit über die Ablagefläche hinausgeschoben werden. Durch das über die Ablagefläche Hinausverschieben des Getränkehalters relativ zu dem Ablageelement wird die Aufnahme bereitgestellt. Über den schraubenförmigen Eingriff des Getränkehalters mit dem Ablageelement kann der Getränkehalter relativ zu dem Ablageelement besonders präzise in Abhängigkeit von einer jeweiligen Rotationsstellung des Getränkehalters relativ zu dem Ablageelement translatorisch bewegt werden. Hierdurch kann eine Höhe der Aufnahme besonders präzise eingestellt werden. Über eine Steigung des gewindeartigen Bereichs kann ein Übersetzungsverhältnis zwischen einem überstrichenen Rotationswinkel des Getränkehalters relativ zu dem Ablageelement und einer translatorischen Höhenverstellung des Getränkehalters relativ zu dem Ablageelement vorgegeben werden. Je steiler jeweilige Windungen des gewindeartigen Bereichs sind, desto größer ist die translatorische Bewegung des Getränkehalters relativ zu dem Ablageelement bei einer gegebenen Rotationsbewegung des Getränkehalters relativ zu dem Ablageelement. Über den schraubenförmigen Eingriff kann der Getränkehalter in jeder Position relativ zu dem Ablageelement besonders sicher gehalten werden.

In diesem Zusammenhang ist es in einer Weiterbildung vorgesehen, dass der Getränkehalter ein Spiralelement umfasst, welches dazu eingerichtet ist, die Wandung bereitzustellen, und welches in einer spiralförmigen Führung des Ablageelements geführt ist, wodurch der schraubenförmige Eingriff zwischen dem Getränkehalter und dem Ablageelement bereitgestellt ist. Beispielsweise kann das Spiralelement als Spiralfeder ausgebildet sein. Bei der spiralförmigen Führung kann es sich um einen Spiralkanal beziehungsweise einen Gewindekanal in dem Ablageelement handeln. Zumindest ein Teilbereich des Spiralelements ist in jeder Stellung der Getränkehaltereinrichtung in der spiralförmigen Führung des Ablageelements angeordnet, um ein sicheres Verstellen der Getränkehaltereinrichtung zu ermöglichen. Beim Verstellen der Getränkehaltereinrichtung zwischen der Verstaustellung und der wenigstens einen Gebrauchsstellung wird das Spiralelement durch die spiralförmige Führung des Ablageelements hindurchbewegt, wodurch der Getränkehalter relativ zu dem Ablageelement translatorisch bewegt wird. Durch das Anordnen des Spiralelements bereichsweise in der spiralförmigen Führung ist in jeder rotatorischen Ausrichtung des Getränkehalters zu dem Ablageelement besonders präzise vorgegeben, wie weit der Getränkehalter über die Ablagefläche übersteht.

In weiterer Ausgestaltung der Erfindung ist es vorgesehen, dass der Getränkehalter durch ein an einem freien Ende des Spiralelements gehaltenes Ringelement abgeschlossen wird, welches in der Gebrauchsstellung die Aufnahme zu ihrer dem Ablageelement abgewandten Seite hin begrenzt. Insbesondere liegt das Ringelement an einem oberen Ende des Spiralelements an beziehungsweise ist auf ein oberes Ende des Spiralelements aufgesteckt. Dieses obere Ende wird in seinem Abstand zu der Ablagefläche verstellt bei einem Verstellen der Getränkehaltereinrichtung zwischen der Verstaustellung und der wenigstens einen Gebrauchsstellung. In der wenigstens einen Gebrauchsstellung ist das Ringelement oberhalb der Ablagefläche angeordnet. Das Ringelement kann eine Verletzungsgefahr für einen Fahrzeuginsassen bei Kontakt mit dem freien Ende des Spiralelements besonders geringhalten. Weiterhin kann über das Ringelement eine umfangsseitige gleichmäßige Druckverteilung des Getränkehalters auf das in der Aufnahme aufgenommene Getränkebehältnis sichergestellt werden. Hierdurch kann eine Beschädigungsgefahr für das in der Aufnahme aufgenommene Getränkebehältnis in Folge einer Kollision mit dem freien Ende des Spiralelements besonders geringgehalten werden.

Es kann in diesem Zusammenhang weiterhin vorgesehen sein, dass das Ringelement in der Verstaustellung bündig mit dem Ablageelement zur Ablagefläche hin abschließt. Das bedeutet, dass das Ringelement in der Verstaustellung nicht über die Ablagefläche übersteht, sondern gemeinsam mit der Ablagefläche eine glatte Außenoberfläche der Getränkehaltereinrichtung bereitstellt. Hierdurch kann eine Beschädigungsgefahr des Getränkehalters, insbesondere des Ringelements in der Verstaustellung der Getränkehaltereinrichtung besonders geringgehalten werden. Darüber hinaus kann eine besonders glatte Optik der Getränkehaltereinrichtung in deren Verstaustellung ermöglicht werden.

Es ist in weiterer Ausgestaltung der Erfindung vorgesehen, dass das Spiralelement mit seinem dem Antriebselement zugeordneten Ende in eine Führungsnut des Antriebselements eingreift, wodurch eine Rotationsbewegung des Antriebselements in einer Rotationsbewegung des Spiralelements resultiert. Über das Eingreifen des dem Antriebselement zugeordneten Endes in die Führungsnut des Antriebselements ist das Spiralelement drehfest mit dem Antriebselement verbunden. Über das Führen des dem Antriebselement zugeordneten Endes des Spiralelements in der Führungsnut, kann das Spiralelement translatorisch relativ zu dem Antriebselement bewegt werden. Insbesondere ermöglicht das Führen des dem Antriebselement zugeordneten Endes in der Führungsnut, dass das Spiralelement relativ zu dem Ablageelement höhenverstellt werden kann. Die Führungsnut verläuft mit ihrer Längserstreckungsrichtung insbesondere zumindest im Wesentlichen parallel zu einer Verstellrichtung des Spiralelements relativ zu dem Ablageelement beim Verstellen der Getränkehaltereinrichtung zwischen der Verstaustellung und der wenigstens einen Gebrauchsstellung. Für ein Verstellen der Getränkehaltereinrichtung kann somit über die Antriebseinrichtung das Antriebselement in Rotation versetzt werden, wodurch über die drehfeste Verbindung des Spiralelements mit dem Antriebselement die Rotationsbewegung des Spiralelements relativ zu dem Ablageelement ausgelöst wird. Die drehfeste Verbindung des Antriebselements mit dem Spiralelement ermöglicht ein besonders einfaches und präzises Verstellen der Getränkehaltereinrichtung zwischen der Verstaustellung und der wenigstens einen Gebrauchsstellung.

Es ist in weiterer Ausgestaltung der Erfindung vorgesehen, dass die Getränkehaltereinrichtung zwei konzentrisch zueinander angeordnete Spiralelemente mit zueinander unterschiedlichen Durchmessern umfasst, welche jeweils unabhängig voneinander relativ zu dem Ablageelement höhenverstellt werden können. Das bedeutet, dass ein erstes der Spiralelemente von dem zweiten Spiralelement in der Verstaustellung außenumfangsseitig umschlossen wird. Je nach Größe des aufzunehmenden Getränkebehältnisses kann beim Verstellen der Getränkehaltereinrichtung aus der Verstaustellung in die wenigstens eine Gebrauchsstellung das erste Spiralelement oder das zweite Spiralelement relativ zu dem Ablageelement höhenverstellt werden. Ist somit ein kleines Getränkebehältnis von der Getränkehaltereinrichtung aufzunehmen, dann kann das erste Spiralelement mittels der Antriebseinrichtung über die Ablagefläche ausgefahren werden. Ist ein im Vergleich dazu größeres Getränkebehältnis in der Getränkehaltereinrichtung aufzunehmen, dann kann mittels der Antriebseinrichtung das zweite Spiralelement über die Ablagefläche ausgefahren werden. Hierdurch wird bei der Getränkehaltereinrichtung ermöglicht, dass eine Größe der Aufnahme, insbesondere ein Durchmesser der Aufnahme, besonders gut an eine jeweilige Größe des Getränkebehältnisses angepasst werden kann, wodurch das Getränkebehältnis besonders sicher in der Aufnahme der Getränkehaltereinrichtung aufgenommen werden kann.

In diesem Zusammenhang kann es insbesondere vorgesehen sein, dass die Getränkehaltereinrichtung für jedes Spiralelement ein separates Antriebselement umfasst. Die jeweiligen Antriebselemente können jeweils dazu eingerichtet sein, von einem Motor, insbesondere einem Elektromotor der Antriebseinrichtung in Rotation versetzt zu werden. Insbesondere sind die Antriebselemente separat voneinander in Rotation versetzbar ausgebildet. Durch das Vorsehen jeweiliger Antriebselemente für jedes Spiralelement sind die Spiralelemente besonders einfach unabhängig voneinander relativ zu dem Ablageelement verstellbar.

In einer weiteren Ausgestaltung der Erfindung umfasst die Getränkehaltereinrichtung eine Kupplungseinrichtung, welche dazu eingerichtet ist, zwischen einer Kraftübertragung von einem Motor der Antriebseinrichtung auf ein erstes Antriebselement und einer Kraftübertragung von dem Motor auf das zweite Antriebselement umzuschalten. Hierbei ist das erste Antriebselement insbesondere dem ersten Spiralelement zugeordnet und das zweite Antriebselement ist dem zweiten Spiralelement zugeordnet. Das bedeutet, dass das erste Antriebselement dazu eingerichtet ist, das erste Spiralelement relativ zu dem Ablageelement zu verstellen und das zweite Antriebselement dazu eingerichtet ist, das zweite Spiralelement relativ zu dem Ablageelement zu verstellen. Die Kupplungseinrichtung ermöglicht es hierbei, dass lediglich ein Motor der Antriebseinrichtung vorzusehen ist, mittels welchem sowohl das erste Antriebselement als auch das zweite Antriebselement in Rotation versetzt werden können. Hierdurch kann die Getränkehaltereinrichtung, insbesondere die Antriebseinrichtung der Getränkehaltereinrichtung besonders kompakt ausgestaltet werden.

In weiterer Ausgestaltung der Erfindung ist es vorgesehen, dass in der Verstaustellung die beiden Spiralelemente einander umfangsseitig umschließend angeordnet sind, das dem inneren, insbesondere dem ersten Spiralelement zugeordnete erste Antriebselement von dem inneren Spiralelement außenumfangsseitig umschlossen wird, und dass das dem äußeren, insbesondere dem zweiten Spiralelement zugeordnete zweite Antriebselement das äußere Spiralelement außenumfangsseitig umschließt. Das bedeutet, dass ausgehend von einer Rotationsachse radial von innen nach außen das erste Antriebselement angeordnet ist, das innere Spiralelement das erste Antriebselement umschließt, das äußere Spiralelement das innere Spiralelement umschließt und letztendlich das zweite Antriebselement das äußere Spiralelement außenumfangsseitig umschließt. Um die jeweiligen den Antriebselementen zugeordneten Enden der Spiralelemente in den zugeordneten Führungsnuten der Antriebselemente führen zu können, ist es vorgesehen, dass das dem ersten Antriebselement zugeordnete Ende des inneren Spiralelements nach innen und somit dem ersten Antriebselement zugewandt umgebogen ist. Weiterhin ist es vorgesehen, dass das dem zweiten Antriebselement zugeordnete Ende des zweiten Spiralelements nach außen und somit dem zweiten Antriebselement zugewandt umgebogen ist. Bei dem dem jeweiligen Antriebselement zugeordneten Ende des Spiralelements handelt es sich in Einbaulage der Getränkehaltereinrichtung in dem Fahrzeug um ein unteres Ende des Spiralelements. Durch die einander umschließende Anordnung der Antriebselemente sowie der Spiralelemente kann die Getränkehaltereinrichtung besonders kompakt bereitgestellt werden.

Weitere Vorteile, Merkmale und Einzelheiten der Erfindung können sich aus der nachfolgenden Beschreibung möglicher Ausführungsbeispiele sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Kurze Figurenbeschreibung

Die Zeichnung zeigt in:

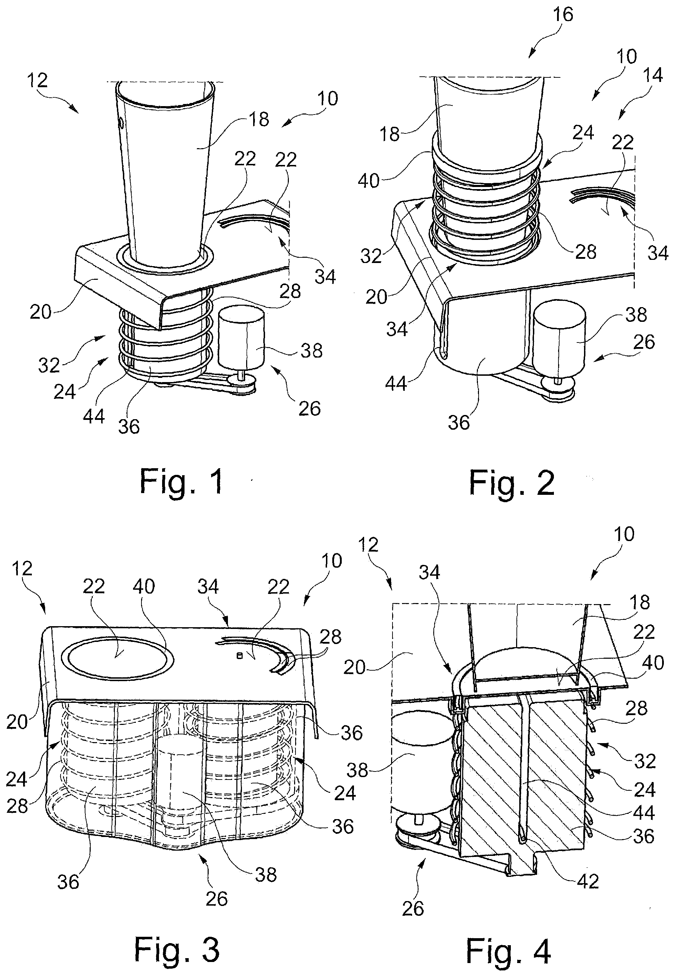

- Fig. 1: eine Getränkehaltereinrichtung für ein Fahrzeug, mit einem eine Ablagefläche bereitstellenden Ablageelement sowie mit wenigstens einem ein Spiralelement umfassenden Getränkehalter, welcher relativ zu dem Ablageelement höhenverstellt werden kann, wodurch eine Aufnahme für ein Getränkebehältnis bereitgestellt werden kann, sowie mit einer Antriebseinrichtung, welche ein Antriebselement umfasst, über welches der Getränkehalter relativ zu dem Ablageelement in Rotation versetzt werden kann, wodurch über einen schraubenförmigen Eingriff zwischen dem Getränkehalter und dem Ablageelement der Getränkehalter relativ zu dem Ablageelement höhenverstellt werden kann, wobei die Getränkehaltereinrichtung in einer Verstaustellung gezeigt ist;
- Fig. 2: eine schematische Perspektivansicht der Getränkehaltereinrichtung gemäß Fig. 1 in einer Gebrauchsstellung, bei welcher der über die durch das Ablageelement bereitgestellte Ablagefläche überstehende Getränkehalter eine Aufnahme umfangsseitig begrenzt, in welcher das Getränkebehältnis aufgenommen werden kann;
- Fig. 3: eine schematische Perspektivansicht der Getränkehaltereinrichtung in der Verstaustellung, bei welcher die Getränkehaltereinrichtung drei Getränkehalter umfasst, von welchen zwei Getränkehalter konzentrisch zueinander und somit einem gleichen Bereich der Ablagefläche zugeordnet angeordnet sind und der dritte Getränkehalter beabstandet und somit neben den Getränkehaltern angeordnet ist, wobei der weitere Getränkehalter einem weiteren Bereich der Ablagefläche zugeordnet ist, wobei die Antriebseinrichtung dazu eingerichtet ist, die Getränkehalter separat zueinander relativ zu der Ablagefläche höhenzuverstellen;
- Fig. 4: eine schematische Schnittansicht durch die Getränkehaltereinrichtung in der Verstaustellung, wobei der Getränkehalter ein Antriebselement der Antriebseinrichtung umfangsseitig umschließend angeordnet ist und ein dem Antriebselement zugeordnetes Ende des Spiralelements des gezeigten Getränkehalters in einer Führungsnut des Antriebselements eingesteckt ist, wodurch der Getränkehalter relativ zu dem Antriebselement und relativ zu dem Ablageelement höhenverstellt werden kann;

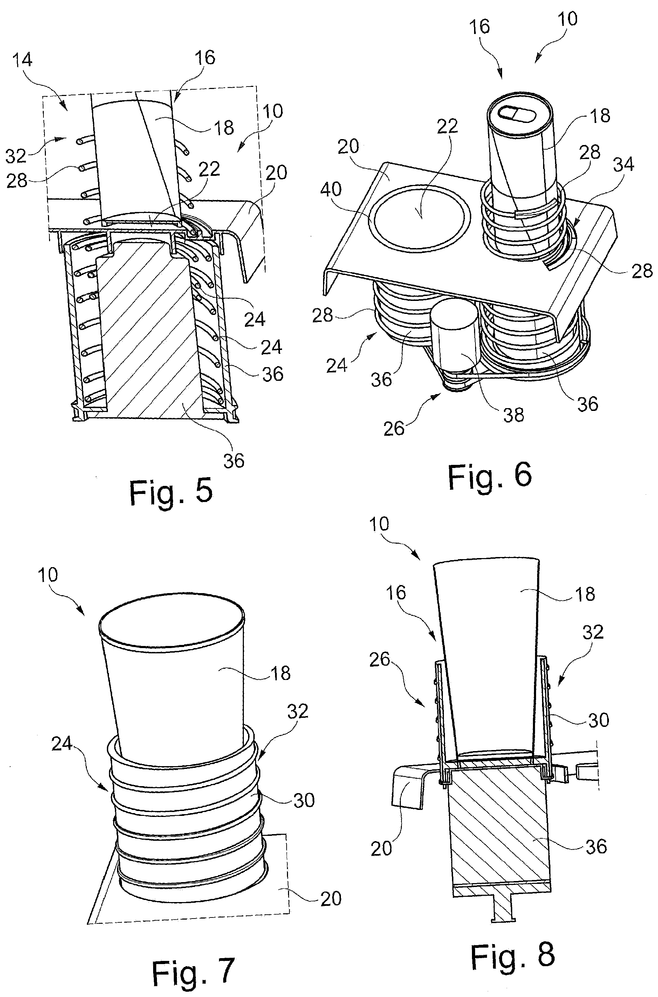

- Fig. 5: eine schematische Schnittansicht der Getränkehaltereinrichtung im Bereich der konzentrisch zueinander angeordneten Getränkehalter, wobei ein erster Getränkehalter über die Ablagefläche des Ablageelements übersteht, wodurch durch den ersten Getränkehalter die Aufnahme für das Getränkebehältnis seitlich begrenzt ist und wobei der zweite Getränkehalter bündig mit der Ablagefläche abschließt oder hinter der Ablagefläche zurückbleibt, wobei für jeden Getränkehalter ein über die Antriebseinrichtung in Rotation versetzbares Antriebselement vorgesehen ist;
- Fig. 6: eine schematische Perspektivansicht der Getränkehaltereinrichtung gemäß Fig. 5;
- Fig. 7: eine nicht erfindungsgemäße schematische Perspektivansicht der Getränkehaltereinrichtung in der Gebrauchsstellung, bei welcher der Getränkehalter durch einen Rohrabschnitt bereitgestellt ist, welcher außenseitig einen gewindeförmigen Abschnitt aufweist, welcher mit dem Ablageelement einen schraubenförmigen Eingriff ausbildet; und
- Fig. 8: eine nicht erfindungsgemäße schematische Schnittansicht der Getränkehaltereinrichtung gemäß Fig. 7.

In den Figuren sind gleichen Elementen sowie Elementen mit gleichen Funktionen gleiche Bezugszeichen zugeordnet.

In den Figuren 1 bis 6 ist eine Getränkehaltereinrichtung 10 für ein Fahrzeug, insbesondere für ein Kraftfahrzeug, insbesondere für einen Kraftwagen, in einer ersten Ausführungsform gezeigt. In den Figuren 7 und 8 ist die Getränkehaltereinrichtung 10 in einer zweiten Ausführungsform dargestellt. Die Getränkehaltereinrichtung 10 ist dazu eingerichtet, zwischen einer Verstaustellung 12 und wenigstens einer Gebrauchsstellung 14 verstellt zu werden. In der Gebrauchsstellung 14 stellt die Getränkehaltereinrichtung 10 eine Aufnahme 16 bereit, in welcher ein Getränkebehältnis 18 aufgenommen werden kann. Bei diesem Getränkebehältnis 18 kann es sich insbesondere um einen Becher, um eine Flasche oder um eine Getränkedose handeln.

In jeder Ausführungsform umfasst die Getränkehaltereinrichtung 10 ein Ablageelement 20, welches eine Ablagefläche 22 für das Getränkebehältnis 18 bereitstellt. Auf dieser Ablagefläche 22 kann das Getränkebehältnis 18 abgestellt werden, um in der Aufnahme 16 aufgenommen zu werden. Insbesondere stellt die Ablagefläche 22 in der Gebrauchsstellung 14 eine Bodenfläche der Aufnahme 16 bereit.

In jeder der Ausführungsformen umfasst die Getränkehaltereinrichtung 10 wenigstens einen Getränkehalter 24 sowie eine Antriebseinrichtung 26, mittels welcher der Getränkehalter 24 relativ zu dem Ablageelement 20 höhenverstellt werden kann. Der jeweilige Getränkehalter 24 ist somit dazu eingerichtet, in der Verstaustellung 12 bündig mit der Ablagefläche 22 abzuschließen oder hinter der Ablagefläche 22 zurückzustehen und in der Gebrauchsstellung 14 über die Ablagefläche 22 überzustehen, um hierdurch eine die Aufnahme 16 umfangsseitig begrenzende Wandung bereitzustellen.

Die erste Ausführungsform und die zweite Ausführungsform unterscheiden sich dadurch, dass die Getränkehaltereinrichtung 10 in der ersten Ausführungsform mehrere Getränkehalter 24 umfasst, wohingegen die Getränkehaltereinrichtung 10 in der zweiten Ausführungsform lediglich einen einzigen Getränkehalter 24 aufweist. Weiterhin umfassen die jeweiligen Getränkehalter 24 der ersten Ausführungsform der Getränkehaltereinrichtung 10 jeweils ein Spiralelement 28, wohingegen der Getränkehalter 24 der zweiten Ausführungsform einen Rohrabschnitt 30 mit einem gewindeförmigen Abschnitt 32 umfasst. In dem gewindeförmigen Abschnitt 32 weist der Rohrabschnitt 30, wie in den Figuren 7 und 8 erkannt werden kann, eine spiralförmige Erhebung an seiner von der Aufnahme 16 abgewandten Außenfläche auf. Das Spiralelement 28 weist aufgrund seiner Spiralform ebenfalls einen gewindeförmigen Abschnitt 32 auf. Mit diesem gewindeförmigen Abschnitt 32 stehen die jeweiligen Getränkehalter 24 mit dem Ablageelement 20 in einem schraubenförmigen Eingriff. Für diesen schraubenförmigen Eingriff weist das Ablageelement 20 eine spiralförmige Führung 34 auf, in welcher der gewindeförmige Abschnitt 32 des Getränkehalters 24 geführt werden kann. Bei einem Höhenverstellen des Getränkehalters 24 relativ zu dem Ablageelement 20 wird der gewindeförmige Abschnitt 32 in der spiralförmigen Führung 34 geführt, wodurch eine Rotationsbewegung des jeweiligen Getränkehalters 24 relativ zu dem Ablageelement 20 in einer translatorischen Bewegung und somit einer Höhenverstellung des jeweiligen Getränkehalters 24 relativ zu dem Ablageelement 20 resultiert.

Die Antriebseinrichtung 26 umfasst ein Antriebselement 36, welches drehfest mit dem Getränkehalter 24 verbunden ist. Vorliegend weist die Antriebseinrichtung 26 für jeden Getränkehalter 24 ein separates Antriebselement 36 auf. Relativ zu dem Antriebselement 36 kann der Getränkehalter 24 translatorisch verstellt werden, insbesondere entlang einer Mittelachse des Getränkehalters 24. Die translatorische Verstellbarkeit des Getränkehalters 24 relativ zu dem zugeordneten Antriebselement 36 ermöglicht somit, dass der Getränkehalter 24 relativ zu dem Ablageelement 20 höhenverstellt werden kann. Die Antriebseinrichtung 26 kann weiterhin einen Motor 38 aufweisen, mittels welchem über einen Bandantrieb das Antriebselement 36 in Rotation versetzt werden kann. Somit ist der Motor 38 dazu eingerichtet, über das Antriebselement 36 den drehfest mit dem Antriebselement 36 verbundenen Getränkehalter 24 in Rotation zu versetzen. Bei dem Motor 38 handelt es sich vorliegend um einen Elektromotor.

In Fig. 1 ist die Getränkehaltereinrichtung 10 in der Verstaustellung 12 gezeigt. In Fig. 2 ist dieselbe Getränkehaltereinrichtung 10 in einer Gebrauchsstellung 14 gezeigt. In dieser Gebrauchsstellung 14 ist einer der Getränkehalter 24 mittels der Antriebseinrichtung 26 über die Ablagefläche 22 überstehend angeordnet worden. In Fig. 3 sind sämtliche Getränkehalter 24 der Getränkehaltereinrichtung 10 bündig mit der Ablagefläche 22 abschließend beziehungsweise hinter der Ablagefläche 22 zurückstehend angeordnet gezeigt. Hierbei sind unterschiedliche mögliche Ausgestaltungen beziehungsweise Anordnungen der Getränkehalter 24 in der Getränkehaltereinrichtung 10 dargestellt, welche beliebig miteinander kombiniert werden können. Wie in den Figuren 2 und 3 besonders gut erkannt werden kann, kann der Getränkehalter 24 durch ein an einem freien Ende des Spiralelements 28 gehaltenes Ringelement 40 abgeschlossen werden. Dieses Ringelement 40 begrenzt in der Gebrauchsstellung 14 des Getränkehalters 24 die Aufnahme 16 zu ihrer dem Ablageelement 20 abgewandten Seite und somit nach oben. In der Verstaustellung 12 schließt das Ringelement 40 bündig mit der Ablagefläche 22 nach oben ab. Alternativ kann in der Verstaustellung 12 das Ringelement 40 hinter der Ablagefläche 22 zurückstehend in der Verstaustellung 12 der Getränkehaltereinrichtung 10 verstaut sein.

Umfasst die Getränkehaltereinrichtung 10 mehrere Getränkehalter 24, dann können die Getränkehalter 24 nebeneinander oder konzentrisch zueinander angeordnet sein. In Fig. 3 sind zwei der Getränkehalter 24 konzentrisch zueinander angeordnet und ein weiterer Getränkehalter 24 ist neben diesen konzentrisch angeordneten Getränkehaltern 24 angeordnet. Von den konzentrisch angeordneten Getränkehaltern 24 wird ein erster Getränkehalter 24 in der Verstaustellung 12 der Getränkehaltereinrichtung 10 umfangsseitig nach außen von dem zweiten Getränkehalter 24 umschlossen. Die konzentrisch zueinander angeordneten Getränkehalter 24 sind vorliegend an ihrem freien Ende keilförmig abgeschrägt, wodurch eine Verletzungsgefahr für Fahrzeuginsassen bei einem Überstehen der Getränkehalter 24 über die Ablagefläche 22 besonders geringgehalten werden kann. Vorliegend ist jedem der Getränkehalter 24 ein separates Antriebselement 36 zugeordnet. Um mittels eines einzigen Motors 38 der Antriebseinrichtung 26 sämtliche Getränkehalter 24 unabhängig voneinander relativ zu der Ablagefläche 22 höhenverstellen zu können, kann die Antriebseinrichtung 26 eine in den Figuren nicht gezeigte Kupplungseinrichtung umfassen, über welche eingestellt werden kann, welches der Antriebselemente 36 von dem Motor 38 in Rotation zu versetzen ist.

Um zum einen eine drehfeste Verbindung zwischen den jeweiligen Getränkehaltern 24 und dem zugeordneten Antriebselement 36 sicherzustellen und zum anderen eine translatorische Bewegbarkeit der jeweiligen Getränkehalter 24 relativ zu dem zugeordneten Antriebselement 36 entlang der Rotationsachse zu ermöglichen, ist es vorgesehen, dass ein dem jeweiligen Antriebselement 36 zugeordnetes Ende des jeweiligen Getränkehalters 24, vorliegend ein unterer Schenkelarm 42, in eine Führungsnut 44 des Antriebselements 36 eingreift. Diese Führungsnut 44 verläuft mit ihrer Längserstreckungsrichtung parallel zur Rotationsachse des Antriebselements 36 beziehungsweise des Getränkehalters 24, wie in Fig. 4 erkannt werden kann.

Die konzentrisch zueinander angeordneten Getränkehalter 24 sind in den Figuren 5 und 6 besonders gut erkennbar, in welchen der erste Getränkehalter 24 für das Bereitstellen der Aufnahme 16 über die Ablagefläche 22 übersteht. Wie in Fig. 5 erkannt werden kann, ist für den ersten, inneren Getränkehalter 24 ein erstes Antriebselement 36 vorgesehen und für den zweiten, äußeren Getränkehalter 24 ist ein zweites Antriebselement 36 vorgesehen. Das zweite Antriebselement 36 umschließt in der Verstaustellung 12 der Getränkehaltereinrichtung 10 beide konzentrisch zueinander angeordneten Getränkehalter 24 sowie das erste Antriebselement 36 außenumfangsseitig. In der Verstaustellung 12 sind somit die beiden konzentrisch zueinander angeordneten Spiralelemente 28 einander umfangsseitig umschließend angeordnet. Hierbei wird das dem inneren Spiralelement 28 zugeordnete erste Antriebselement 36 von dem inneren Spiralelement 28 außenumfangsseitig umschlossen. Weiterhin umschließt das dem äußeren Spiralelement 28 zugeordnete zweite Antriebselement 36 das äußere Spiralelement 28 außenumfangsseitig. Um die jeweilige drehfeste Verbindung des ersten Getränkehalters 24 mit dem ersten Antriebselement 36 und des zweiten Getränkehalters 24 mit dem zweiten Antriebselement 36 zu gewährleisten, greift der untere Schenkelarm 42 des ersten Getränkehalters 24 in die Führungsnut 44 des ersten Antriebselements 36 ein und der untere Schenkelarm 42 des zweiten Getränkehalters 24 greift in die Führungsnut 44 des zweiten Antriebselements 36 ein. Hierfür ist der untere Schenkelarm 42 des ersten Spiralelements 28 radial nach innen umgebogen wohingegen der untere Schenkelarm 42 des zweiten Spiralelements 28 radial nach außen umgebogen ist.

In den Figuren 7 und 8 ist die Getränkehaltereinrichtung 10 in ihrer zweiten Ausführungsform in der Gebrauchsstellung 14 dargestellt. Die Ausgestaltung des Getränkehalters 24 der zweiten Ausführungsform der Getränkehaltereinrichtung 10 kann mit der Anordnung der Getränkehalter 24 der ersten Ausführungsform der Getränkehaltereinrichtung 10 kombiniert werden. Das bedeutet, dass in der zweiten Ausführungsform der Getränkehaltereinrichtung 10 mehrere Getränkehalter 24 vorgesehen sein können, welche nebeneinander oder konzentrisch zueinander angeordnet sein können.

Für ein Verstellen der Getränkehaltereinrichtung 10 zwischen der Verstaustellung 12 und der wenigstens einen Gebrauchsstellung 14 kann das durch den Motor 38 angetriebene jeweilige Antriebselement 36 das zugeordnete Spiralelement 28, bei welchem es sich insbesondere um eine Spiralfeder handeln kann, in eine gewünschte Halteposition drehen. Im ungenutzten Zustand und somit in der Verstaustellung 12 der Getränkehaltereinrichtung 10 ist an einer dem Innenraum des Fahrzeugs zugewandten Seite der Getränkehaltereinrichtung 10, insbesondere bei Blick auf die Ablagefläche 22, lediglich das Ringelement 40 sichtbar, welcher eine Abstellposition für das Getränkebehältnis 18 anzeigen kann. Ein unterer Federschenkel, vorliegend das dem Antriebselement 36 zugeordnete Ende des Spiralelements 28, gleitet beim Drehen in einer schlitzförmigen Öffnung, vorliegend der Führungsnut 44 des Antriebselements 36, wobei bei einem Verstellen der Getränkehaltereinrichtung 10 aus der Verstaustellung 12 in die wenigstens eine Gebrauchsstellung 14 der Federschenkel in der schlitzförmigen Öffnung nach oben gleitet. Ein Gegenstück in einer Oberfläche des Fahrzeugs, vorliegend in dem Ablageelement 20, ist die spiralförmige Führung 34, welches als Widerlager für die Bewegung dient. Das Spiralelement 28 kann somit durch eine Dekoroberfläche des Ablageelements 20, vorliegend durch die Ablagefläche 22 hindurchgeschraubt werden. Das Widerlager weist besonders gute Gleiteigenschaften auf und kann in einem gemeinsamen Gehäuse mit dem Spiralelement 28, dem jeweiligen zugeordneten Antriebselement 36 sowie dem Motor 38 befestigt sein. Das Ringelement 40 kann durch eine Endkappe am freien Ende des jeweiligen Spiralelements 28 ersetzt werden. In der Verstaustellung 12 kann dann lediglich eine rampenförmige Vertiefung in dem Ablageelement 20 sichtbar sein, durch welche hindurch der jeweilige Getränkehalter 24 sich aus dem Ablageelement 20 herausschrauben kann. Weist der Getränkehalter 24 das Ringelement 40 auf, dann kann im Ablageelement 20 im Bereich der spiralförmigen Führung 34 eine ringförmige Vertiefung vorgesehen sein.

Beim Vorsehen der konzentrisch zueinander angeordneten Getränkehalter 24 kann im Inneren des zweiten Spiralelements 28 mit dem größeren Durchmesser das erste, im Durchmesser kleinere Spiralelement 28 angeordnet sein, welches für kleinere Getränkebehältnisse 18 genutzt werden kann. Angetrieben können beide Spiralelemente 28 mittels eines gemeinsamen Motors 38 werden. Ein Wechsel eines Antriebs zwischen dem im Durchmesser kleineren ersten Spiralelement 28 zu dem im Durchmesser größeren zweiten Spiralelement 28 kann mittels einer Magnetkupplung erfolgen.

Statt das Spiralelement 28 kann der Getränkehalter 24 den Rohrabschnitt 30 umfassen, der wie eine Schraube durch das Ablageelement 20 beim Verstellen der Getränkehaltereinrichtung 10 aus der Verstaustellung 12 in die wenigstens eine Gebrauchsstellung 14 nach oben bewegt werden kann und so eine geschlossene Hülle für das zu haltende Getränkebehältnis 18 bereitstellt. Ein Antrieb sowie sonstige Funktionen des den Rohrabschnitt 30 umfassenden Getränkehalters 24 kann entsprechend der im Zusammenhang mit der ersten Ausführungsform der Getränkehaltereinrichtung 10 beschriebenen Funktionen sowie der beschriebenen Antriebseinrichtung 26 ausgeführt sein.

Insgesamt zeigt die Erfindung wie ein elektromechanischer Cupholder, vorliegend die Getränkehaltereinrichtung 10, bereitgestellt werden kann.

### BEZUGSZEICHENLISTE

- 10: Getränkehaltereinrichtung
- 12: Verstaustellung
- 14: Gebrauchsstellung
- 16: Aufnahme
- 18: Getränkebehältnis
- 20: Ablageelement
- 22: Ablagefläche
- 24: Getränkehalter
- 26: Antriebseinrichtung
- 28: Spiralelement
- 30: Rohrabschnitt
- 32: gewindeförmiger Abschnitt
- 34: spiralförmige Führung
- 36: Antriebselement
- 38: Motor
- 40: Ringelement
- 42: Schenkelarm
- 44: Führungsnut

## Patentansprüche

1. Getränkehaltereinrichtung (10) für ein Fahrzeug, welche zwischen einer Verstaustellung (12) und wenigstens einer Gebrauchsstellung (14) verstellbar ist, mit
- einem eine Ablagefläche (22) für das Getränkebehältnis (18) bereitstellenden Ablageelement (20), welches in der Gebrauchsstellung (14) eine Bodenfläche einer Aufnahme (16) für das Getränkebehältnis (18) bereitstellt,
- einem Getränkehalter (24), welcher dazu eingerichtet ist, in der Gebrauchsstellung (14) eine die Aufnahme (16) umfangsseitig begrenzende Wandung bereitzustellen und in der Verstaustellung (12) bündig mit der Ablagefläche (22) oder unter der Ablagefläche (22) abzuschließen, wobei der Getränkehalter (24) mit einem weiteren Element einen schraubenförmigen Eingriff ausbildet, und
einer Antriebseinrichtung (26), welche ein Antriebselement (36) umfasst, welches dazu eingerichtet ist, eine Rotationsbewegung des Getränkehalters (24) relativ zu dem weiteren Element auszulösen, wodurch für ein Verstellen der Getränkehaltereinrichtung (10) zwischen der Verstaustellung (12) und der Gebrauchsstellung (14) der Getränkehalter (24) relativ zu dem Ablageelement (20) höhenverstellt werden kann.
**dadurch gekennzeichnet, dass**
der Getränkehalter (24) mit dem Ablageelement (20) als weiterem Element den schraubenförmigen Eingriff ausbildet, und dass das Antriebselement (26) dazu eingerichtet ist, den Getränkehalter (24) relativ zu dem Ablageelement (20) in Rotation zu versetzen.

2. Getränkehaltereinrichtung (10) nach Anspruch 1,
**dadurch gekennzeichnet, dass**
der Getränkehalter (24) ein Spiralelement (28) umfasst, welche dazu eingerichtet ist, die Wandung bereitzustellen, und welches in einer spiralförmigen Führung (34) des Ablageelements (20) geführt ist, wodurch der schraubenförmigen Eingriff zwischen dem Getränkehalter (24) und dem Ablageelement (20) bereitgestellt ist.

3. Getränkehaltereinrichtung (10) nach Anspruch 2,
**dadurch gekennzeichnet, dass**
der Getränkehalter (24) durch ein an einem freien Ende des Spiralelements (28) gehaltenes Ringelement (40) abgeschlossen wird, welches in der Gebrauchsstellung (14) die Aufnahme (16) zu ihrer dem Ablageelement (20) abgewandten Seite hin begrenzt.

4. Getränkehaltereinrichtung (10) nach Anspruch 3,
**dadurch gekennzeichnet, dass**
das Ringelement (40) in der Verstaustellung (12) bündig mit dem Ablageelement (20) zur Ablagefläche (22) hin abschließt.

5. Getränkehaltereinrichtung (10) nach einem der Ansprüche 2 bis 4,
**dadurch gekennzeichnet, dass**
das Spiralelement (28) mit seinem dem Antriebselement (36) zugeordneten Ende in eine Führungsnut (44) des Antriebselements (36) eingreift, wodurch eine Rotationsbewegung des Antriebselements (36) in einer Rotationsbewegung des Spiralelements (28) resultiert.

6. Getränkehaltereinrichtung (10) nach einem der Ansprüche 2 bis 5,
**dadurch gekennzeichnet, dass**
zwei konzentrisch zueinander angeordnete Spiralelemente (28) mit zueinander unterschiedlichem Durchmesser vorgesehen sind, welche jeweils unabhängig voneinander relativ zu dem Ablageelement (20) höhenverstellt werden können.

7. Getränkehaltereinrichtung (10) nach Anspruch 6,
**dadurch gekennzeichnet, dass**
für jedes Spiralelement (28) ein Antriebselement (36) vorgesehen ist.

8. Getränkehaltereinrichtung (10) nach Anspruch 7,
**dadurch gekennzeichnet, dass**
eine Kupplungseinrichtung vorgesehen ist, welche dazu eingerichtet ist, zwischen einer Kraftübertragung von einem Motor (38) der Antriebseinrichtung (26) auf ein erstes Antriebselement (36) und einer Kraftübertragung von dem Motor (38) auf das zweite Antriebselement (36) umzuschalten.

9. Getränkehaltereinrichtung (10) nach einem der Ansprüche 6 bis 8,
**dadurch gekennzeichnet, dass**
in der Verstaustellung (12) die beiden Spiralelemente (28) einander umfangsseitig umschließend angeordnet sind, das dem inneren Spiralelement (28) zugeordnete erste Antriebselement (36) von dem inneren Spiralelement (28) außenumfangsseitig umschlossen wird und das dem äußeren Spiralelement (28) zugeordnete zweite Antriebselement (36) das äußere Spiralelement (28) außenumfangsseitig umschließt.

## Claims

1. A beverage holder device (10) for a vehicle, which is adjustable between a stowage position (12) and at least one use position (14), comprising
- a support element (20) providing a support surface (22) for the beverage container (18), which in the use position (14) provides a bottom surface of a receptacle (16) for the beverage container (18),
- a beverage holder (24), which is configured to provide, in the use position (14), a wall surrounding the receptacle (16) and, in the stowage position (12), to terminate flush with or below the support surface (22), wherein the beverage holder (24) forms a screw-shaped engagement with a further element, and
- a drive device (26) comprising a drive element (36) configured to initiate a rotational movement of the beverage holder (24) relative to the further element, whereby, for adjusting the beverage holder device (10) between the stowage position (12) and the use position (14), the beverage holder (24) can be adjusted in height relative to the support element (20),
**characterized in that**
the beverage holder (24), together with the support element (20) as the further element, forms the screw-shaped engagement, and **in that** the drive element (36) is configured to set the beverage holder (24) into rotation relative to the support element (20).

2. The beverage holder device (10) according to claim 1,
**characterized in that**
the beverage holder (24) comprises a spiral element (28), which is configured to provide the wall, and which is guided in a spiral guide (34) of the support element (20), thereby providing the screw-shaped engagement between the beverage holder (24) and the support element (20).

3. The beverage holder device (10) according to claim 2,
**characterized in that**
the beverage holder (24) is closed by a ring element (40) held at a free end of the spiral element (28), which in the use position (14) bounds the receptacle (16) on its side facing away from the support element (20).

4. The beverage holder device (10) according to claim 3,
**characterized in that**
the ring element (40) terminates flush with the support element (20) towards the support surface (22) in the stowage position (12).

5. The beverage holder device (10) according to any one of claims 2 to 4,
**characterized in that**
the spiral element (28), with its end associated with the drive element (36), engages in a guide groove (44) of the drive element (36), whereby a rotational movement of the drive element (36) results in a rotational movement of the spiral element (28).

6. The beverage holder device (10) according to any one of claims 2 to 5,
**characterized in that**
two spiral elements (28) arranged concentrically with respect to one another and having mutually different diameters are provided, which can each be adjusted in height independently of one another relative to the support element (20).

7. The beverage holder device (10) according to claim 6,
**characterized in that**
one drive element (36) is provided for each spiral element (28).

8. The beverage holder device (10) according to claim 7,
**characterized in that**
a coupling device is provided, which is configured to switch between a force transmission from a motor (38) of the drive device (26) to a first drive element (36) and a force transmission from the motor (38) to the second drive element (36).

9. The beverage holder device (10) according to any one of claims 6 to 8,
**characterized in that**
in the stowage position (12) the two spiral elements (28) are arranged circumferentially enclosing one another, the first drive element (36) associated with the inner spiral element (28) is circumferentially enclosed on the outside by the inner spiral element (28), and the second drive element (36) associated with the outer spiral element (28) circumferentially encloses the outer spiral element (28) on the outside.

## Revendications

1. Dispositif de porte-boisson (10) pour un véhicule, réglable entre une position de rangement (12) et au moins une position d'utilisation (14), comprenant
- un élément de support (20) fournissant une surface d'appui (22) pour le récipient de boisson (18), lequel, dans la position d'utilisation (14), fournit une surface de fond d'un logement (16) pour le récipient de boisson (18),
- un porte-boisson (24), qui est configuré pour fournir, dans la position d'utilisation (14), une paroi délimitant le logement (16) de manière périphérique et, dans la position de rangement (12), pour affleurer la surface d'appui (22) ou se situer en dessous de celle-ci, le porte-boisson (24) formant un engrènement hélicoïdal avec un autre élément, et
- un dispositif d'entraînement (26) comprenant un élément d'entraînement (36) configuré pour déclencher un mouvement de rotation du porte-boisson (24) par rapport à l'autre élément, de sorte que, pour régler le dispositif de porte-boisson (10) entre la position de rangement (12) et la position d'utilisation (14), le porte-boisson (24) puisse être réglé en hauteur par rapport à l'élément de support (20),
**caractérisé en ce que**
le porte-boisson (24), avec l'élément de support (20) en tant qu'autre élément, forme l'engrènement hélicoïdal, et **en ce que** l'élément d'entraînement (36) est configuré pour mettre le porte-boisson (24) en rotation par rapport à l'élément de support (20).

2. Dispositif de porte-boisson (10) selon la revendication 1,
**caractérisé en ce que**
le porte-boisson (24) comprend un élément en spirale (28), configuré pour fournir la paroi, et guidé dans un guide en spirale (34) de l'élément de support (20), ce qui fournit l'engrènement hélicoïdal entre le porte-boisson (24) et l'élément de support (20).

3. Dispositif de porte-boisson (10) selon la revendication 2,
**caractérisé en ce que**
le porte-boisson (24) est fermé par un élément annulaire (40) maintenu à une extrémité libre de l'élément en spirale (28), lequel, dans la position d'utilisation (14), délimite le logement (16) du côté opposé à l'élément de support (20).

4. Dispositif de porte-boisson (10) selon la revendication 3,
**caractérisé en ce que**
l'élément annulaire (40) affleure l'élément de support (20) en direction de la surface d'appui (22) dans la position de rangement (12).

5. Dispositif de porte-boisson (10) selon l'une des revendications 2 à 4,
**caractérisé en ce que**
l'élément en spirale (28), avec son extrémité associée à l'élément d'entraînement (36), s'engage dans une rainure de guidage (44) de l'élément d'entraînement (36), de sorte qu'un mouvement de rotation de l'élément d'entraînement (36) entraîne un mouvement de rotation de l'élément en spirale (28).

6. Dispositif de porte-boisson (10) selon l'une des revendications 2 à 5,
**caractérisé en ce que**
deux éléments en spirale (28) disposés concentriquement l'un par rapport à l'autre et présentant des diamètres différents sont prévus, lesquels peuvent chacun être réglés en hauteur indépendamment l'un de l'autre par rapport à l'élément de support (20).

7. Dispositif de porte-boisson (10) selon la revendication 6,
**caractérisé en ce que**
un élément d'entraînement (36) est prévu pour chaque élément en spirale (28).

8. Dispositif de porte-boisson (10) selon la revendication 7,
**caractérisé en ce que**
un dispositif d'embrayage est prévu, lequel est configuré pour commuter entre une transmission de force d'un moteur (38) du dispositif d'entraînement (26) vers un premier élément d'entraînement (36) et une transmission de force du moteur (38) vers le second élément d'entraînement (36).

9. Dispositif de porte-boisson (10) selon l'une des revendications 6 à 8,
**caractérisé en ce que**
dans la position de rangement (12), les deux éléments en spirale (28) sont disposés en s'enveloppant mutuellement de manière périphérique, le premier élément d'entraînement (36) associé à l'élément en spirale intérieur (28) étant enveloppé extérieurement de manière périphérique par l'élément en spirale intérieur (28), et le second élément d'entraînement (36) associé à l'élément en spirale extérieur (28) enveloppant extérieurement de manière périphérique l'élément en spirale extérieur (28).
